# EUROPEAN PATENT APPLICATION

(11) **EP 4 746 420 A1**
(43) Date of publication of application: **20.05.2026**
(21) Application number: 24838401.8
(22) Date of filing: 29.04.2024
(51) Int. Cl.: H04N 21/431

(54) **PAGE DISPLAY METHOD AND APPARATUS, AND DEVICE AND STORAGE MEDIUM**

(30) Priority: 11.07.2023 CN 202310848625
(71) Applicant: BEIJING YOUZHUJU NETWORK TECHNOLOGY CO. LTD., Beijing 101299 (CN)
(72) Inventor: FU, Qiang, Beijing 100028 (CN); LI, Liya, Beijing 100028 (CN); WANG, Li, Beijing 100028 (CN); ZHAO, Mengjie, Beijing 100028 (CN); WANG, Yujing, Beijing 100028 (CN); ZHANG, Xinlai, Beijing 100028 (CN); ZHANG, Borui, Beijing 100028 (CN)
(74) Representative: Isarpatent
(86) International application number: PCT/CN2024/090528
(87) International publication number: WO 2025/011142

(57) **Abstract**

The embodiments of the present disclosure relate to the technical field of computers. Disclosed are a page display method and apparatus, and a device and a storage medium. The method comprises: playing a target video in a preset page; and displaying in the preset page an object identifier set associated with the target video, wherein the object identifier set comprises object identifiers respectively corresponding to a plurality of explanatory objects associated with the target video, the object identifier set comprises a first object identifier displayed in a first display mode and a second object identifier displayed in a second display mode, the first object identifier is used for triggering a preset interaction event of a corresponding explanatory object, the first object identifier comprises an object identifier corresponding to a first target explanatory object, and a display state of the first target explanatory object meets a preset condition. By using the technical solution, the automatic change of an object identifier display mode can be realized according to a display state of an explanatory object, thereby helping to improve the viewing experience and interaction experience.

## Description

The present application claims priority of the Chinese Patent Applications No. 202310848625.2 filed on July 11, 2023, the content of which is incorporated as a part of the present application.

### TECHNICAL FIELD

The embodiment of the disclosure relates to a page display method and apparatus, an electronic device, and a storage medium.

### BACKGROUND

With the development of mobile internet, the progress of network technology and the popularity of intelligent terminals, more and more users watch videos. The video can include a plurality of explanation objects, and users can complete interaction events based on the explanation objects.

### SUMMARY

Embodiments of the present disclosure provide a page display method and device, an electronic device and a storage medium, which can optimize the existing page display solution.

According to a first aspect, at least one embodiment of the present disclosure provides a page display method, which includes:
playing a target video in a preset page;
displaying an object identifier set associated with the target video in the preset page, wherein the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, and the first object identifier includes an object identifier corresponding to a first target explanation object, and a display state of the first target explanation object satisfies a preset condition.

According to a second aspect, at least one embodiment of the present disclosure provides a page display apparatus, which includes:
a video play module, configured to play a target video in a preset page;
an object identifier display module, configured to display an object identifier set associated with the target video in the preset page, wherein the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, and the first object identifier includes an object identifier corresponding to a first target explanation object, and a display state of the first target explanation object satisfies a preset condition.

According to a third aspect, at least one embodiment of the present disclosure provides an electronic device, which includes:
at least one processor;
a storage device, configured to store at least one program,
wherein, the at least one program upon execution by the at least one processor, cause the at least one processor to implement the page display method according to the embodiments of the present disclosure.

According to a fourth aspect, at least one embodiment of the present disclosure provides a storage medium containing computer-executable instructions is provided, the computer-executable instructions, when executed by a computer processor, are configured to perform the page display method according to the embodiments of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a flowchart of a page display method provided by an embodiment of the present disclosure;
Fig. 2 is a schematic diagram of an interface provided by an embodiment of the present disclosure;
Fig. 3 is a schematic diagram of an interface interaction provided by an embodiment of the present disclosure;
Fig. 4 is a schematic diagram of another interface interaction provided by an embodiment of the present disclosure;
Fig. 5 is a flowchart of another page display method provided by an embodiment of the present disclosure;
Fig. 6 is a schematic diagram of another interface interaction provided by an embodiment of the present disclosure;
Fig. 7 is a structural schematic diagram of a page display apparatus provided by an embodiment of the present disclosure;
Fig. 8 is a schematic structural diagram of an electronic device provided by an embodiment of the present disclosure.

### DETAILED DESCRIPTION

Hereinafter, embodiments of the present disclosure will be described in more detail with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only configured to illustrative purposes, and are not configured to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on". The term "one embodiment" refers to "at least one embodiment"; the term "another embodiment" refers to "at least one other embodiment"; the term "some embodiments" refers to "at least some embodiments". Related definitions of other terms will be given in the following description.

It should be noted that the concepts of "first" and "second" mentioned in the present disclosure are only configured to distinguish different devices, modules or units, and are not configured to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged among multiple devices in the embodiment of the present disclosure are only configured to illustrative purposes, and are not configured to limit the scope of these messages or information.

It can be understood that before using the technical solutions disclosed in several embodiments of the present disclosure, users should be informed of the types, scope of use and usage scenarios of personal information involved in the present disclosure in an appropriate way in accordance with relevant laws and regulations, and user authorization is required.

For example, in response to receiving a proactive request from a user, a prompt message is sent to the user, explicitly stating that the operation the user requested will necessitate acquiring and utilizing the user's personal information, so that the user can decide whether to provide personal information to software or hardware such as electronic device, applications, servers or storage media that perform the operation of the technical solution of the present disclosure according to the prompt message.

As an alternative and non-restrictive implementation mode, in response to receiving the proactive request from the user, the way to send the prompt message to the user can be, for example, in the form of a pop-up window, in which the prompt message can be presented in text. In addition, the pop-up window can also contain selection controls "agree" and "disagree" for the user to choose regarding the provision of personal information to electronic device.

It can be understood that the above notification and user authorization procedures are illustrative and do not limit the implementation modes of the present disclosure. Other methods that comply with relevant laws and regulations may also be applied in the implementation modes of the present disclosure.

It can be understood that the data involved in the present technical solution (including but not limited to the data itself, data acquisition or use) shall comply with the requirements of corresponding laws and regulations.

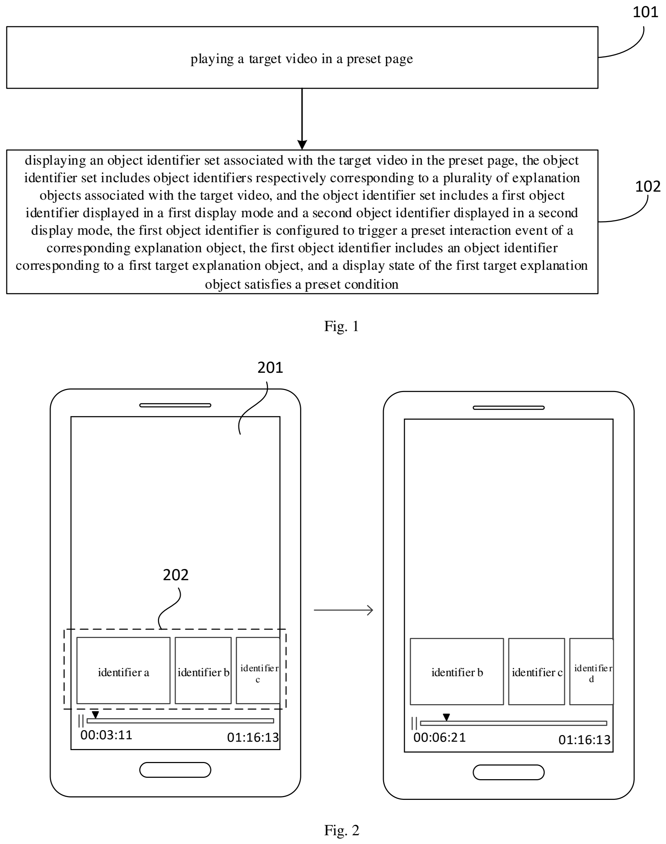

Fig. 1 is a flowchart of a page display method provided by an embodiment of the present disclosure. The embodiment of the present disclosure is suitable for the situation of page display. The method can be implemented by a page display apparatus, which can be realized in the form of software and/or hardware, and optionally, by an electronic device, which can be a mobile terminal such as a mobile phone, a smart watch, a tablet computer and a personal digital assistant, or a personal computer (PC) or a server.

As illustrated by Fig. 1, the method includes:
Step 101: playing a target video in a preset page.

In the embodiment of the present disclosure, the preset page may be a page in a preset application program. The preset application can provide video playing function, such as live broadcast function and live broadcast playback function, and can be installed in an electronic device. The preset page can be a video playing page, for example, a live broadcast playback page. The target video can be understood as the video currently being played, and the target video can include a plurality of explanation objects.

For example, taking a live broadcast scene as an example, in the process of live broadcast, the anchor usually explains a plurality of objects, and the plurality of objects here can be regarded as explanation objects, which can be specific items, commodities, services, scenic spots, topics or people, and can be determined according to the specific live broadcast theme or live broadcast scene. Optionally, the target video may include a live broadcast playback video, which can be understood as a video recorded in the live broadcast process, and the live broadcast content may include live images and sounds. After the live broadcast, the user can enter a preset page to review the live broadcast content by watching the live broadcast playback video. For example, the live broadcast playback video can be the playback video of a target live broadcast session, which can be understood as the live broadcast session currently being played back and can be selected by the user.

Step 102: displaying an object identifier set associated with the target video in the preset page, the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, the first object identifier includes an object identifier corresponding to a first target explanation object, and a display state of the first target explanation object satisfies a preset condition.

In the embodiment of the present disclosure, in the process of playing the target video in the preset page, the object identifier set associated with the target video is displayed in the preset page, and the specific display position is not limited, for example, it can be the bottom, top, left side or right side of the preset page. Taking the bottom as an example, the object identifier set can be displayed above the play progress control of the target video. For example, the distance between the display area of the object identifier set and the display area of the play progress control is less than the preset distance threshold. The object identifier can be understood as an identifier configured to represent the attributes of the explanation object, and the specific display form is not limited, such as icons or cards. The explanation object and the object identifier can have a one-to-one relationship, that is, each explanation object corresponds to one object identifier.

In the embodiment of the present disclosure, the object identifier set includes object identifiers corresponding to the plurality of explanation objects associated with the target video. Taking the live broadcast playback video as an example, the plurality of explanation objects associated with the target video can include all the explanation objects in the live broadcast (such as the target live broadcast session). When all the explanation objects are included, the target video can be the playback video of the whole live broadcast, that is, the target video includes all the live broadcast contents from the start to the end of the live broadcast, which is convenient for users to watch more comprehensive live broadcast contents, such as the opening or the interaction between the anchor and the audience between the explanations of different explanation objects.

For example, when displaying the object identifier set, the object identifiers can be displayed according to the explanation order of the explanation objects in the target video, for example, in the form of a list, and taking a horizontal list as an example, the explanation order corresponding to the object identifiers from left to right increases in turn. When the number of object identifiers in the object identifier set is greater than the preset number threshold, partial object identifiers in the object identifier set can be displayed, and the user can view the object identifiers that not currently displayed by inputting a gesture operation such as a sliding operation.

For example, during the live broadcast, the audience can usually interact with the audience, such as purchasing commodity, viewing the details of commodity, booking services, obtaining scenic spots or downloading topics. In order to enrich the live broadcast playback function, in the embodiment of this disclosure, the user can trigger a preset interaction event for the explanation object during the live broadcast playback process, and the preset interaction event, such as the above-mentioned example of purchasing commodity, can be set according to actual needs. When displaying the object identifier set, the object identifiers in the object identifier set can include at least two display modes, including a first display mode and a second display mode. The object identifier displayed in the first display mode is recorded as the first object identifier, and the object identifier displayed in the second display mode is recorded as the second object identifier. The object identifier corresponding to the same explanation object can be displayed in different display modes under different circumstances. For the object identifier displayed in the first display mode, it can be configured to trigger the preset interaction event of the corresponding explanation object. For example, if the commodity identifier of a commodity is displayed in the first display mode, the user can complete the purchase of the commodity by triggering the commodity identifier or enter the commodity details page to view the commodity details.

Optionally, the differences between the first display mode and the second display mode include different display styles and/or different display positions. Among them, the display style can include, for example, size, color, transparency, identifier content (such as copywriting content), and whether controls are included or not. The display position can be, for example, the relative position in the currently displayed object identifier in the object identifier set, such as the display serial number, etc.

Optionally, the first object identifier includes an associated image, associated text information and a first preset control of the corresponding explanation object, the preset control is configured to trigger the preset interaction event; the second object identifier includes an associated image of a corresponding explanation object; the display area of the first object identifier is larger than the display area of the second object identifier. The associated image can be a physical diagram or schematic diagram of the explanation object, and the associated text information can be descriptive text that explains the explanation object.

Optionally, at the same time, the first object identifier to be displayed is less than or equal to 1.

In the embodiment of the present disclosure, the first object identifier includes the object identifier corresponding to the first target explanation object, and the display state of the first target explanation object satisfies a preset condition. Optionally, the preset condition include that the display state of the first target explanation object is in an explaining state, or the first target explanation object has entered the explaining state because the object identifier corresponding to the first target explanation object is triggered by the user; the target explanation object with the display state being in the explaining state is determined according to a triggering operation of the user for the corresponding object identifier or according to current play progress of the target video.

For example, the current play progress can be dynamically changed with the play of the target video, and can also be dynamically determined according to the adjustment of the play progress by the user. Optionally, a play progress control is displayed in the preset page, the play progress control is configured to adjust the current play progress of the target video.

For example, the target video can be divided into sections in advance, so that the target video contains a plurality of play sections (for example, for a live broadcast playback video, the play section can be a playback section), and different play sections correspond to different explanation objects. The starting point of the play section is the starting explanation time of the corresponding explanation object, and the ending point of the play section is the ending explanation time of the corresponding explanation object. It is determined whether the current play progress (which can be understood as the current paly time or current play position) is within a certain play section, and if so, the play section is recorded as a target play section, and the display state of the explanation object corresponding to the target play section is in the explaining state, that is, the explanation object can become the first target explanation object. Optionally, if the current play time is not within a certain play section, such as a section between two play sections, such as between the first play section and the second play section, it can be considered that no certain explanation object is currently explained in the target video, and the first target explanation object can be the explanation object corresponding to the first play section, or the explanation object corresponding to the play section closest to the current play progress, or it can be considered that there is no first target explanation object, which can be set according to actual needs.

For example, the user can choose to trigger an object identifier, and when the user triggers an object identifier, the explanation object corresponding to the object identifier can enter the explaining state.

For example, if an explanation object has entered the explaining state because the corresponding object identifier is triggered by the user, it can also be considered that the display state of the explanation object satisfies the preset condition, that is, the explanation object can become the first target explanation object.

For example, after determining the first target explanation object, it is determined that the object identifier corresponding to the first target explanation object belongs to the first object identifier. Optionally, it is determined whether the first object identifier is currently being displayed, and if not, the object identifier corresponding to the first target explanation object can be displayed as the first object identifier; if yes, it is further determined whether the object identifier corresponding to the first target explanation object is the same as the currently displayed first object identifier; if not, it is determined that the object identifier corresponding to the first target explanation object is a new first object identifier, and change the original first object identifier into a second object identifier, that is, displaying the object identifier corresponding to the first target explanation object in the first display mode and display the original first object identifier in the second display mode; if yes, the first target explanation object remains unchanged.

Fig. 2 is a schematic diagram of an interface provided by an embodiment of the present disclosure. As illustrated by Fig. 2, a target video is played in a preset page 201, and an object identifier set 202 associated with the target video is displayed at the bottom of the preset page 201 and above a play progress control. Three object identifiers are shown in the figure, and the currently displayed object identifiers can be viewed by inputting a horizontal sliding operation. The duration of the target video is 01:16:13, assuming that the current play progress is 00:03:11, and an explanation object A corresponding to the identifier a is being explained, then the identifier a belongs to the first object identifier, and the user can complete the preset interaction event of the explanation object A by triggering the current identifier a, while the identifier b and the identifier c belong to the second object identifier, and the display size of the first object identifier is larger than the display size of the second object identifier (identifier c is not fully displayed in the figure). As illustrated by Fig. 2, assuming that the current play progress changes to 00:06:21 with the playing of the target video or the active adjustment of the user, and this play progress corresponds to the explanation object B, the identifier b becomes the new first object identifier, and the identifiers A (not shown), C and D belong to the second object identifier, and the user can complete the preset interaction event of the explanation object B by triggering the current identifier b.

In the page display method of the embodiment of the present disclosure, a target video is played in a preset page, and an object identifier set associated with the target video is displayed in the preset page, the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of the corresponding explanation object, and the first object identifier includes the object identifier corresponding to the first target explanation object, and a display state of the first target explanation object satisfies a preset condition. By adopting the technical solution, the object identifier set of a plurality of associated explanation objects are displayed in the process of playing the target video in the page, and the corresponding target explanation objects are dynamically determined according to the display state of the explanation objects, so that the object identifier that can trigger the preset interaction event is dynamically determined to include the object identifier of the target explanation object, and the automatic change of the display mode of the object identifier is realized, which is beneficial to improving the viewing experience and interactive experience of the user when watching the video.

In some embodiments, in response to the object identifier set not including the object identifier triggered by the user, the current first object identifier is the object identifier corresponding to the first target explanation object. Therefore, when the user does not trigger the object identifier, the first object identifier can be automatically determined, so that the user can make clear that the current explanation content in the target video corresponds to the explanation object according to the first object identifier, and the viewing experience is improved, and the preset interaction event can be completed by triggering the object identifier.

For example, the user can select the explanation object that he or she is interested in by triggering the object identifier. If the user does not trigger any object identifier during the process of playing the target video, the first object identifier can be dynamically determined according to the current play progress. Among them, the specific trigger mode of triggering the object identifier is not limited, for example, the specific trigger mode can be click, double click or long press.

In some embodiments, the method further includes: in response to the object identifier set including at least one object identifier triggered by the user, the current first object identifier is the object identifier recently triggered by the user. Therefore, when the user has triggered the object identifier, the object identifier recently triggered by the user can be determined as the first object identifier, so as to meet the user's requirement of completing the preset interaction event for the explanation object corresponding to the triggered object identifier.

In some embodiments, the method further comprises the following steps: in response to a triggering operation of a user for a target object identifier, determining a target progress corresponding to an explanation object to which the target object identifier belongs in the target video, the target object identifier is a second object identifier before being triggered; adjusting the current play progress of the target video to the target progress. Therefore, after the user triggers the object identifier, the current play progress of the target video can be automatically adjusted to the corresponding progress of the explanation object to which the triggered object identifier belongs in the video, so that the user can watch the corresponding explaining content without manual adjustment by operating the play progress control, so as to improve the interaction efficiency and experience.

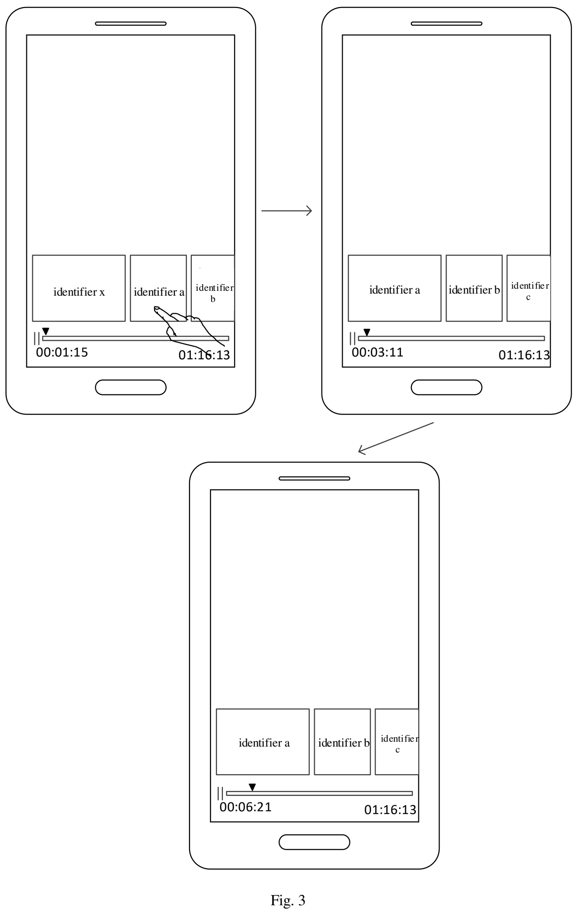

Fig. 3 is a schematic diagram of interface interaction provided by an embodiment of the present disclosure. As illustrated by Fig. 3, assuming that the current play progress is 00:01:15 and the user triggers the identifier a, it is determined that the identifier a of the explanation object A belongs to the first object identifier, and the identifier a is displayed in the first display mode, and the current play progress is adjusted to the target progress of the explanation object A in the target video at 00:03:11. As the target video continues to be played, the current play progress has changed to 00:06:21, and the explanation object B corresponding to the identifier b is being explained. Because the identifier a has been triggered by the user, the identifier a is still the first object identifier, and the display mode of the identifiers remains unchanged. The user can still complete the preset interaction event of the explanation object A by triggering the current identifier a.

In some embodiments, the method further includes: displaying at least two page entries of the preset page in the target page, and different page entries correspond to different initial play progress of the target video after entering the preset page. Therefore, the user can select the initial play progress of the target video by selecting the page entry, and it is not necessary to enter the preset page for manual adjustment, thus improving the video playing efficiency.

In some embodiments, the at least two page entries include a first page entry and/or a second page entry; the initial play progress corresponding to the first page entry is the starting point of the target video; the initial play progress corresponding to the second page entry is the initial explaining time corresponding to a preset explanation object among the plurality of explanation objects, the preset explanation object is an explanation object whose popularity property satisfies a preset requirement. Therefore, the user can choose to watch from the starting point of the video or from the initial explanation time corresponding to a specific explanation object by selecting the page entry, so as to meet the different viewing needs of the user. The specific redisplay mode of the popularity property is not limited, for example, it can be determined according to the explanation order. The preset requirement can be the explanation object with a preset explanation number, and the preset explanation number can be, for example, 1, that is, the preset explanation object is the first explanation object; the preset requirements can also be, for example, the number of preset interaction events is the most during the live broadcast, or the audience is the most during the explanation of the preset explanation object.

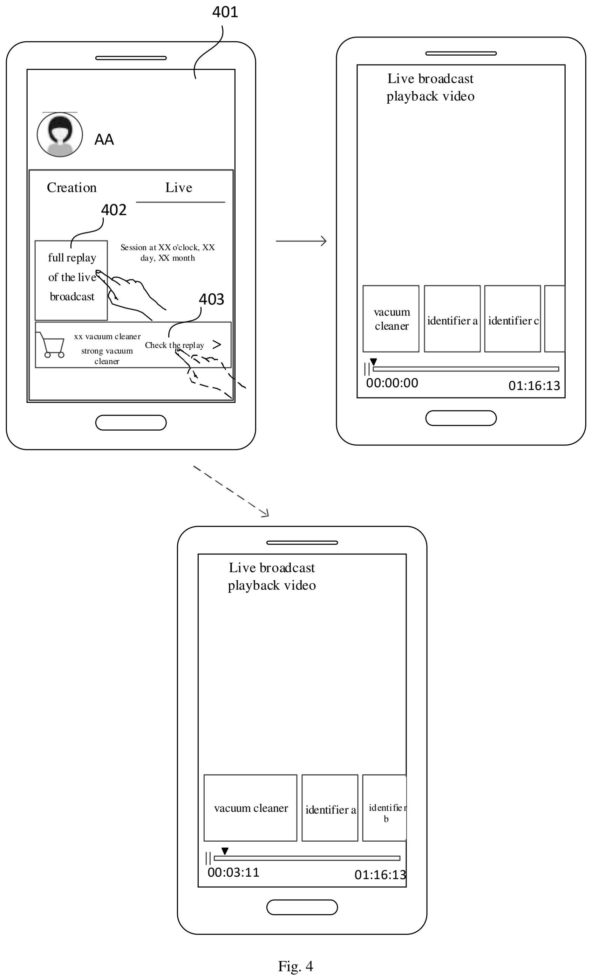

Fig. 4 is a schematic diagram of another interface interaction provided by an embodiment of the present disclosure. Taking a live broadcast playback scene as an example, as illustrated by Fig. 4, a first page entry 402 and a second page entry 403 of a preset page are displayed in a target page 401. The associated area of the second page entry 403 displays the associated information of the preset explanation object. Taking the explanation object as a commodity as an example, the associated information may include the title of the commodity, specifically including information such as the name of the commodity, such as "xx vacuum cleaner" in the figure, and may also include the introduction of the commodity, such as "strong vacuum cleaner" in the figure. Assuming that the preset explanation object is the first explanation object, if the user triggers the first page entry 402, the initial play progress of the target video is the video starting point, as illustrated by the figure, 00:00:00, at this time, the object explanation is not carried out. Optionally, when the object identifier set is displayed, the object identifiers are displayed in the second display mode, that is, they are all second object identifiers. If the user triggers the second page entry 403, the initial play progress of the target video is the initial explaining time corresponding to the first explanation object, as illustrated by the figure at 00:03:11. At this time, the object identifier corresponding to the vacuum cleaner is the first object identifier, that is, it is displayed in the first display mode.

In some embodiments, the method also includes: in response to a preset operation, switching the object identifier set being displayed in the preset page to a hidden state; determining a second target explanation object according to the current play progress of the target video; in response to the object identifier set being in a hidden state, displaying the object identifier corresponding to the second target explanation object in the preset page in a target display mode, the target display mode is different from the first display mode and the second display mode, and the target display mode is associated with a display mode of the second target explanation object in the live broadcast process, a displaying style in the live broadcast process includes a presentation in the form of an explanation card in a preset area of the live broadcast page, and the explanation card displays the explaining state information, explanation object associated information and a second preset control, and the second preset control is configured to trigger the preset interaction event. Therefore, switching the object identifier set to the hidden state can be supported, that is, the display of the object identifier set can be temporarily cancelled, so that users can view a more comprehensive live broadcast picture, dynamically determine the current explanation object according to the current play progress, and display the object identifier of the current explanation object in a target display mode associated with the display mode in the live broadcast process, thereby creating an atmosphere of watching the live broadcast and further enhancing the viewing experience.

Among them, the target display mode can be different from the first display mode. The object identifier displayed in the target display mode can also be configured to trigger the preset interaction event of the corresponding explanation object. Optionally, the target display mode is the same as the display mode of the second target explanation object in the live broadcast process, that is, it is displayed in the form of an explanation card in the preset area of the preset page. The explanation card displays the explaining state information, explanation object associated information and a second preset control corresponding to the second target explanation object, and the second preset control is configured to trigger the preset interaction event.

In some embodiments, the target page includes an associated page of a live broadcast host corresponding to the live broadcast playback video, and the method further includes displaying a live broadcast page entry in the target page when it is determined that the live broadcast host is in a live broadcast state. Therefore, it is convenient for the user to quickly choose to watch the live broadcast or watch the live broadcast playback from the associated page of the live broadcast host. For example, the associated page may be the personal homepage of the live broadcast host (such as the account of the anchor).

In some embodiments, the displaying of the object identifier set associated with the target video in the preset page includes: in response to a triggering operation of a user for a preset expansion control in the preset page, displaying the object identifier set associated with the target video in the preset page. The advantage of this setting is that the user can freely choose whether to expand the display of the object identifier set.

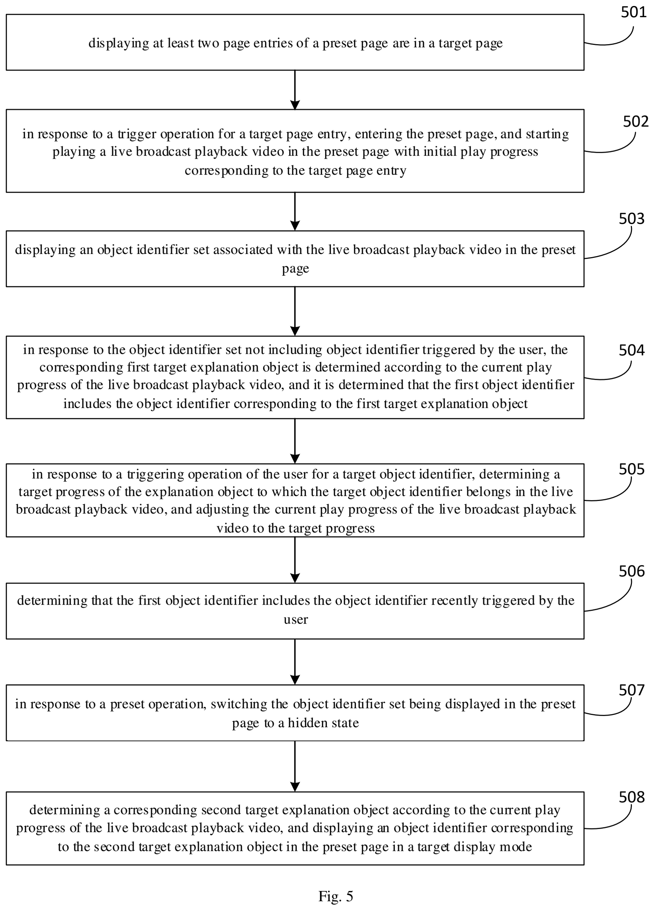

Fig. 5 is a flowchart of another page display method provided by the embodiment of the present disclosure. The embodiment of the present disclosure is optimized on the basis of various alternative solutions in the above embodiment. Specifically, taking a live broadcast playback scene as an example, the method comprises the following steps:
Step 501: displaying at least two page entries of a preset page are in a target page.

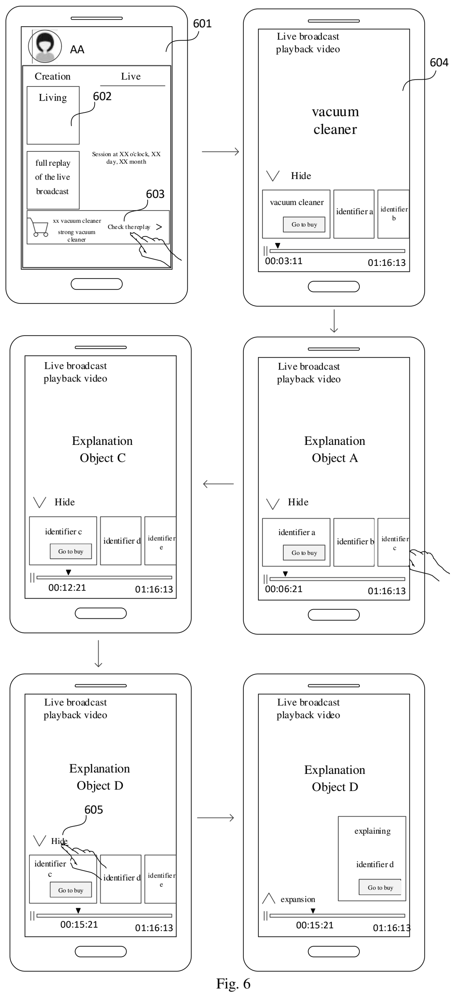

Fig. 6 is a schematic diagram of another interface interaction provided by an embodiment of the present disclosure. As illustrated by Fig. 6, when the anchor is in a live broadcast state, a live broadcast page entry 602 and two page entries of the preset page are displayed in the personal homepage 601 of the anchor.

Optionally, the target page can also include a target preset control, and in response to the trigger of the target preset control, a list of explanation objects associated with the target video is displayed (for example, all the explanation objects in the live broadcast can be included), so that the user can preview the specific explanation objects in the live broadcast without entering the preset page.

Step 502: in response to a trigger operation for a target page entry, entering the preset page, and starting playing a live broadcast playback video in the preset page with initial play progress corresponding to the target page entry.

As illustrated by Fig. 6, assuming the user triggers the target page entry 603 and enters the preset page 604. In the preset page 604, assuming the initial explanation time corresponding to the first explanation object is 00:03:11, the live broadcast playback video is started to explain the vacuum cleaner.

Step 503: displaying an object identifier set associated with the live broadcast playback video in the preset page.

As illustrated by Fig. 6, when the live broadcast playback video is started, the displayed object identifier set includes a vacuum cleaner identifier as a first object identifier, and an identifier a and an identifier b as second object identifiers. The first object identifier contains a preset control, such as "go to buy" in the figure, and the user can complete the preset interaction event of the explanation object by triggering the preset control, such as purchasing commodity. The first object identifier may also include associated images of the explanation object, such as object images (specifically, commodity images) and text associated information, such as commodity attribute information (specifically, commodity prices). The second object identifier may include an associated image explanation object, such as an object thumbnail, that is, the size of the image included in the second object identifier is smaller than the size of the image included in the first object identifier.

Optionally, after the user triggers the preset control, a first page of the explanation object to which the first object identifier belongs is displayed for completing the preset interaction event, which can be displayed on the upper layer of the preset page, and the display size of the first page is smaller than that of the preset page. Optionally, after the user triggers the first object identifier (for example, clicking the area outside the preset control), jumping to a second page of the explanation object to which the first object identifier belongs, the second page can be an object detail page, and can return to the preset page after closing the second page.

Step 504: in response to the object identifier set not including object identifier triggered by the user, the corresponding first target explanation object is determined according to the current play progress of the live broadcast playback video, and it is determined that the first object identifier includes the object identifier corresponding to the first target explanation object.

As illustrated by Fig. 6, in response to the user not triggering the object identifier, with the playback of the live broadcast video, the first target explanation object corresponding to the current play progress becomes the explanation object A behind the vacuum cleaner, and the identifier an automatically becomes the first object identifier.

Step 505: in response to a triggering operation of the user for a target object identifier, determining a target progress of the explanation object to which the target object identifier belongs in the live broadcast playback video, and adjusting the current play progress of the live broadcast playback video to the target progress.

As illustrated by Fig. 6, after the user triggers the current identifier c as the second object identifier, the initial explanation time of the explanation object C to which the identifier c belongs in the live broadcast playback video is determined, such as 00:12:21, and then adjusting the current play progress of the live broadcast playback video to 00: 12:21 and continuing to play, so as to explain the explanation object C.

Step 506: determining that the first object identifier includes the object identifier recently triggered by the user.

As illustrated by Fig. 6, with the continuous playback of the live broadcast playback video, the current play progress becomes 00:15:21, and the explanation object in the video has changed from explanation object C to explanation object D. However, because the user has triggered the identifier c, the identifier c is kept as the first object identifier.

Step 507: in response to a preset operation, switching the object identifier set being displayed in the preset page to a hidden state.

As illustrated by Fig. 6, the preset operation can be a trigger operation for a target control 605, such as the "hide" control in the figure, which hides the object identifier set. The target control can be a control corresponding to the preset expansion control. The preset expansion control can be, for example, the "expansion" control in the figure.

Step 508: determining a corresponding second target explanation object according to the current play progress of the live broadcast playback video, and displaying an object identifier corresponding to the second target explanation object in the preset page in a target display mode.

As illustrated by Fig. 6, after the object identifier set enters the hidden state, it is determined that the currently explanation object D is based on the current play progress, and then the object identifier d corresponding to the explanation object D is displayed in the preset page in the target display mode. The target display mode is associated with the display mode of the second target explanation object in the live broadcast process, for example, the target display mode is the same as the display mode of the explanation object D in the live broadcast process.

According to the page display method provided by the embodiment of the disclosure, at least two page entries of a preset page are displayed in the target page, so that users can conveniently trigger a corresponding page entry to enter the preset page according to their own requirements, and the live broadcast playback video is played in the preset page with the initial play progress corresponding to the page entry, and the object identifier set of a plurality of associated explanation objects is displayed in the process of playing the live broadcast playback video. When the user does not trigger the object identifier, according to the video play progress, the corresponding target explanation object is dynamically determined, and then the first object identifier is automatically determined, so that the automatic change of the object identifier display mode is realized; when the user triggers the object identifier, the play progress is automatically adjusted, and the first object identifier is determined according to the object identifier recently triggered by the user, so that the object identifier which can trigger the preset interaction event can be flexibly determined; after the user takes the initiative to hide the object identifier set, the object identifier of the currently explanation object can be displayed in the target display mode associated with the display mode in the live broadcast process, so as to create an atmosphere of watching the live broadcast, which is beneficial to improving the convenience and flexibility of the user when watching the live broadcast playback, and effectively improving the viewing experience and interactive experience.

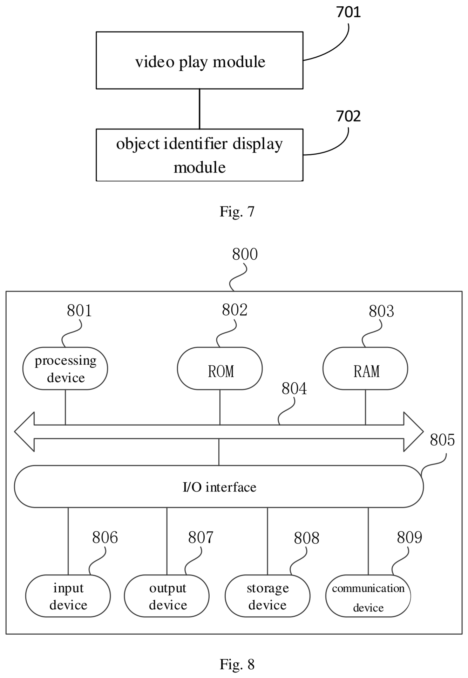

Fig. 7 is a structural schematic diagram of a page display apparatus provided by an embodiment of the present disclosure. As illustrated by Fig. 7, the device includes:
a video play module 701, configured to play a target video in a preset page;
an object identifier display module 702, configured to display an object identifier set associated with the target video in the preset page, the object identifier set includes object identifiers respectively corresponding to a plurality of explanation objects associated with the target video, and the object identifier set includes a first object identifier displayed in a first display mode and a second object identifier displayed in a second display mode. The first object identifier is configured to trigger a preset interaction event of a corresponding explanation object, and the first object identifier includes an object identifier corresponding to a first target explanation object, and a display state of the first target explanation object satisfies a preset condition.

The page display apparatus provided by the embodiment of the present disclosure displays the object identifier set of the plurality of associated explanation objects in the process of playing the target video in the page, dynamically determines the corresponding target explanation object according to the display state of the explanation object, and further dynamically determines that the object identifier that can trigger the preset interaction event includes the object identifier of the target explanation object, thus realizing the automatic change of the object identifier display mode, and being beneficial to improving the viewing experience and interactive experience of users when watching the live broadcast.

Optionally, the preset condition includes that the display state of the first target explanation object is in an explaining state, or the first target explanation object has entered the explaining state because the object identifier corresponding to the first target explanation object is triggered by a user; a target explanation object with a display state being an explaining state is determined according to a triggering operation of the user for a corresponding object identifier, or according to current play progress of the target video.

Optionally, the target video includes a live broadcast playback video.

Optionally, differences between the first display mode and the second display mode include: different display styles and/or different display positions.

Optionally, the first object identifier includes an associated image, associated text information and a first preset control of the corresponding explanation object, the first preset control is configured to trigger the preset interaction event; the second object identifier includes an associated image of a corresponding explanation object; a display area of the first object identifier is larger than a display area of the second object identifier.

Optionally, in response to the object identifier set not including an object identifier triggered by the user, a current first object identifier is an object identifier corresponding to the first target explanation object.

Optionally, in response to the object identifier set including at least one object identifier triggered by the user, a current first object identifier is an object identifier recently triggered by the user.

Optionally, the device further comprises:
a target progress determination module, configured to respond to a triggering operation of a user for a target object identifier, determining a target progress corresponding to an explanation object to which the target object identifier belongs in the target video, wherein the target object identifier is a second object identifier before being triggered;
a process adjustment module, configured to adjust current play progress of the target video to the target progress.

Optionally, the device further comprises:
an entry display module, configured to display at least two page entries of the preset page in a target page, wherein different page entries correspond to different initial play progress of the target video after entering the preset page;
the at least two page entries include a first page entry and/or a second page entry; an initial play progress corresponding to the first page entry is a starting point of the target video; an initial play progress corresponding to the second page entry is an initial explaining time corresponding to a preset explanation object among the plurality of explanation objects, the preset explanation object is an explanation object whose popularity property satisfies a preset requirement.

Optionally, the device further comprises:
a hidden state switching module, configured to respond to a preset operation, and switch the object identifier set being displayed in the preset page to a hidden state;
a target object determining module, configured to determine a corresponding second target explanation object according to the current play progress of the target video;
an identifier display module, configured to, in response to the object identifier set being in the hidden state, display the object identifier corresponding to the second target explanation object in the preset page in a target display mode, the target display mode is different from the first display mode and the second display mode, and the target display mode is associated with a display mode of the second target explanation object in a live broadcast process, a displaying style in the live broadcast process includes a presentation in a form of an explanation card in a preset area of the live broadcast page, and the explanation card displays explaining state information, explanation object associated information and a second preset control, and the second preset control is configured to trigger the preset interaction event.

Optionally, the object identifier display module is specifically configured to display the object identifier set associated with the target video in the preset page in response to a triggering operation of the user for a preset expansion control in the preset page.

The page display apparatus provided by the embodiment of the present disclosure can execute the page display method provided by any embodiment of the present disclosure, and has corresponding functional modules and beneficial effects.

It is worth noting that each unit and module included in the above device is only divided according to functional logic, but it is not limited to the above division, as long as the corresponding functions can be realized; In addition, the specific names of each functional unit are only for the convenience of distinguishing each other, and are not configured to limit the protection scope of the disclosed embodiment.

FIG. 8 is a structural diagram of an electronic device according to an embodiment of the present disclosure. Referring to FIG. 8, it is a structural diagram of an electronic device (for example, the terminal device or server in FIG. 8) 800 suitable for implementing the embodiments of the present disclosure. The terminal device in the embodiments of the present disclosure may include but not limited to mobile terminals such as mobile phones, notebook computers, digital broadcast receivers, personal digital assistants (PDA), portable android devices (PAD), portable multimedia players (PMP), and vehicle-mounted terminals (such as vehicle-mounted navigation terminals), and fixed terminals such as digital TV and desktop computers. The electronic device shown in FIG. 8 is only an example, and should not impose any limitations on the functionality and scope of use of the embodiments of the present disclosure.

As illustrated by FIG. 8, the electronic device 800 may include a processing device (such as a central processing unit, and a graphics processor) 801, it may execute various appropriate actions and processes according to a program stored in a read-only memory (ROM) 802 or a program loaded from a storage device 808 to a random access memory (RAM) 803. In RAM 803, various programs and data required for operations of the electronic device 800 are also stored. The processing device 801, ROM 802, and RAM 803 are connected to each other by a bus 804. An input/output (I/O) interface 805 is also connected to the bus 804.

The following apparatuses may be connected to the I/O interface 805: an input device 806 such as a touch screen, a touchpad, a keyboard, a mouse, a camera, a microphone, an accelerometer, and a gyroscope; an output device 807 such as a liquid crystal display (LCD), a loudspeaker, and a vibrator; a storage device 808 such as a magnetic tape, and a hard disk drive; and a communication device 809. The communication device 809 may allow the electronic device 800 to wireless-communicate or wire-communicate with other devices so as to exchange data. Although FIG. 8 shows the electronic device 800 with various apparatuses, it should be understood that it is not required to implement or possess all the apparatuses shown. Alternatively, it may implement or possess the more or less apparatuses.

In particular, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication device 809, or installed from the storage device 808, or installed from ROM 802. When the computer program is executed by the processing device 801, the above functions defined in the method in the embodiments of the present disclosure are executed.

The names of messages or information exchanged between multiple devices in the embodiments of the present disclosure are only for illustrative purposes, and are not intended to limit the scope of these messages or information.

The electronic device provided in the present embodiment and the page display method provided in the above embodiment belong to the same inventive concept. Technical details not described in the present embodiment can be found in the above embodiment, and the present embodiment has the same beneficial effects as the above embodiment.

The embodiments of the present disclosure provide a computer storage medium, on which a computer program is stored, which, when executed by a processor, realizes the page display method provided in the above embodiment.

The embodiments of the present disclosure provide a computer program product, including a computer program, which, when executed by a processor, realizes the page display method provided in the above embodiment.

It is to be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local region network ("LAN"), a wide region network ("WAN"), an internet work (such as the Internet), and an end-to-end network (such as an ad hoc end-to-end network), as well as any currently known or future-developed networks.

The above-described computer-readable medium may be included in the above-described electronic device, or may also exist alone without being assembled into the electronic device.

The above-described computer-readable medium carries one or more programs that, when executed by the electronic device, cause the electronic device to: play a target video in a preset page; display an object identifier set associated with the target video in the preset page, wherein the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, and the first object identifier includes an object identifier corresponding to a first target explanation object, and a display state of the first target explanation object satisfies a preset condition.

The computer program code for executing the operation of the present disclosure may be written in one or more programming languages or combinations thereof, the above programming language includes but not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The units involved in the embodiments of the disclosure can be realized by software or hardware. In certain cases, the name of a unit does not constitute a limitation on the unit itself. For example, the first acquisition unit can also be described as "a unit that acquires at least two Internet protocol addresses".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to at least one embodiment of the present disclosure, a page display method is provided and includes:
playing a target video in a preset page;
displaying an object identifier set associated with the target video in the preset page, wherein the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, and the first object identifier includes an object identifier corresponding to a first target explanation object, and a display state of the first target explanation object satisfies a preset condition.

According to at least one embodiment of the present disclosure, the preset condition includes that the display state of the first target explanation object is in an explaining state, or the first target explanation object has entered the explaining state because the object identifier corresponding to the first target explanation object is triggered by a user; a target explanation object with a display state being an explaining state is determined according to a triggering operation of the user for a corresponding object identifier, or according to current play progress of the target video;
and/or, the target video includes a live broadcast playback video.

According to at least one embodiment of the present disclosure, differences between the first display mode and the second display mode include: different display styles and/or different display positions;
and/or, the first object identifier includes an associated image, associated text information and a first preset control of the corresponding explanation object, the first preset control is configured to trigger the preset interaction event; the second object identifier includes an associated image of a corresponding explanation object; a display area of the first object identifier is larger than a display area of the second object identifier.

According to at least one embodiment of the present disclosure, in response to the object identifier set not including an object identifier triggered by the user, a current first object identifier is an object identifier corresponding to the first target explanation object.

According to at least one embodiment of the present disclosure, in response to the object identifier set including at least one object identifier triggered by the user, a current first object identifier is an object identifier recently triggered by the user.

According to at least one embodiment of the present disclosure, the method further includes:
in response to a triggering operation of a user for a target object identifier, determining a target progress corresponding to an explanation object to which the target object identifier belongs in the target video, wherein the target object identifier is a second object identifier before being triggered;
adjusting current play progress of the target video to the target progress.

According to at least one embodiment of the present disclosure, the method further includes:
displaying at least two page entries of the preset page in a target page, wherein different page entries correspond to different initial play progress of the target video after entering the preset page;
wherein the at least two page entries include a first page entry and/or a second page entry; an initial play progress corresponding to the first page entry is a starting point of the target video; an initial play progress corresponding to the second page entry is an initial explaining time corresponding to a preset explanation object among the plurality of explanation objects, the preset explanation object is an explanation object whose popularity property satisfies a preset requirement.

According to at least one embodiment of the present disclosure, the method further includes:
in response to a preset operation, switching the object identifier set being displayed in the preset page to a hidden state;
determining a second target explanation object according to the current play progress of the target video;
in response to the object identifier set being in the hidden state, displaying the object identifier corresponding to the second target explanation object in the preset page in a target display mode, wherein the target display mode is different from the first display mode and the second display mode, and the target display mode is associated with a display mode of the second target explanation object in a live broadcast process, a displaying style in the live broadcast process includes a presentation in a form of an explanation card in a preset area of the live broadcast page, and the explanation card displays explaining state information, explanation object associated information and a second preset control, and the second preset control is configured to trigger the preset interaction event.

According to at least one embodiment of the present disclosure, displaying an object identifier set associated with the target video in the preset page comprises:
in response to a triggering operation of a user for a preset expansion control in the preset page, displaying the object identifier set associated with the target video in the preset page.

According to at least one embodiment of the present disclosure, a page display apparatus is provided and includes:
a video play module, configured to play a target video in a preset page;
an object identifier display module, configured to display an object identifier set associated with the target video in the preset page, wherein the object identifier set includes object identifiers respectively corresponding to a plurality of explanation objects associated with the target video, and the object identifier set includes a first object identifier displayed in a first display mode and a second object identifier displayed in a second display mode, the first object identifier is configured to trigger a preset interaction event of a corresponding explanation object, and the first object identifier includes an object identifier corresponding to a first target explanation object, and a display state of the first target explanation object satisfies a preset condition.

According to at least one embodiment of the present disclosure, an electronic device is provided and includes:
at least one processor;
a storage device, configured to store at least one program,
wherein, the at least one program upon execution by the at least one processor, cause the at least one processor to implement the page display method according to the embodiments of the present disclosure.

According to at least one embodiment of the present disclosure, a storage medium containing computer-executable instructions is provided, the computer-executable instructions, when executed by a computer processor, are configured to perform the page display method according to the embodiments of the present disclosure.

The above description is only the preferred embodiment of the present disclosure and the explanation of the applied technical principles. It should be understood by those skilled in the art that the disclosure scope involved in this disclosure is not limited to the technical solution formed by the specific combination of the above technical features, but also covers other technical solutions formed by any combination of the above technical features or their equivalent features without departing from the above disclosure concept. For example, the above features are replaced with (but not limited to) technical features with similar functions disclosed in this disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in a plurality of embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A page display method, comprising:
playing a target video in a preset page;
displaying an object identifier set associated with the target video in the preset page, wherein the object identifier set comprises object identifiers respectively corresponding to a plurality of explanation objects associated with the target video, and the object identifier set comprises a first object identifier displayed in a first display mode and a second object identifier displayed in a second display mode, the first object identifier is configured to trigger a preset interaction event of a corresponding explanation object, and the first object identifier comprises an object identifier corresponding to a first target explanation object, and a display state of the first target explanation object satisfies a preset condition.

2. The method according to claim 1, wherein the preset condition comprises that the display state of the first target explanation object is in an explaining state, or the first target explanation object has entered the explaining state because the object identifier corresponding to the first target explanation object is triggered by a user; a target explanation object with a display state being an explaining state is determined according to a triggering operation of the user for a corresponding object identifier, or according to current play progress of the target video;
and/or,
the target video comprises a live broadcast playback video.

3. The method according to claim 1 or 2, wherein differences between the first display mode and the second display mode comprise: different display styles and/or different display positions; and/or,
the first object identifier comprises an associated image, associated text information and a first preset control of the corresponding explanation object, the preset control is configured to trigger the preset interaction event; the second object identifier comprises an associated image of a corresponding explanation object; a display area of the first object identifier is larger than a display area of the second object identifier.

4. The method according to any one of claims 1-3, wherein, in response to the object identifier set not comprising an object identifier triggered by the user, a current first object identifier is an object identifier corresponding to the first target explanation object.

5. The method according to any one of claims 1-4, wherein, in response to the object identifier set comprising at least one object identifier triggered by the user, a current first object identifier is an object identifier recently triggered by the user.

6. The method according to any one of claims 1-5, further comprising:
in response to a triggering operation of a user for a target object identifier, determining a target progress corresponding to an explanation object to which the target object identifier belongs in the target video, wherein the target object identifier is a second object identifier before being triggered;
adjusting current play progress of the target video to the target progress.

7. The method according to any one of claims 1-6, further comprising:
displaying at least two page entries of the preset page in a target page, wherein different page entries correspond to different initial play progress of the target video after entering the preset page;
wherein the at least two page entries comprise a first page entry and/or a second page entry; an initial play progress corresponding to the first page entry is a starting point of the target video; an initial play progress corresponding to the second page entry is an initial explaining time corresponding to a preset explanation object among the plurality of explanation objects, the preset explanation object is an explanation object whose popularity property satisfies a preset requirement.

8. The method according to any one of claims 2-7, further comprising:
in response to a preset operation, switching the object identifier set being displayed in the preset page to a hidden state;
determining a second target explanation object according to the current play progress of the target video;
in response to the object identifier set being in the hidden state, displaying the object identifier corresponding to the second target explanation object in the preset page in a target display mode, wherein the target display mode is different from the first display mode and the second display mode, and the target display mode is associated with a display mode of the second target explanation object in a live broadcast process, a displaying style in the live broadcast process comprises a presentation in a form of an explanation card in a preset area of the live broadcast page, and the explanation card displays explaining state information, explanation object associated information and a second preset control, and the second preset control is configured to trigger the preset interaction event.

9. The method according to any one of claims 1-8, wherein displaying an object identifier set associated with the target video in the preset page comprises:
in response to a triggering operation of a user for a preset expansion control in the preset page, displaying the object identifier set associated with the target video in the preset page.

10. The method according to any one of claims 1-9, wherein displaying an object identifier set associated with the target video in the preset page comprises:
displaying the object identifiers according to an explanation order of the plurality of explanation objects in the target video.

11. The method according to any one of claims 2-10, wherein a play progress control is displayed in the preset page, the play progress control is configured to adjust a current play progress of the target video.

12. The method according to claim 7, wherein the preset page comprises a target preset control, the method further comprises:
in response to the target preset control being triggered, displaying a list of the plurality of explanation objects associated with the target video.

13. A page display apparatus, comprising:
a video play module, configured to play a target video in a preset page;
an object identifier display module, configured to display an object identifier set associated with the target video in the preset page, wherein the object identifier set comprises object identifiers respectively corresponding to a plurality of explanation objects associated with the target video, and the object identifier set comprises a first object identifier displayed in a first display mode and a second object identifier displayed in a second display mode, the first object identifier is configured to trigger a preset interaction event of a corresponding explanation object, and the first object identifier comprises an object identifier corresponding to a first target explanation object, and a display state of the first target explanation object satisfies a preset condition.

14. An electronic device, comprising:
at least one processor;
a storage device, configured to store at least one program,
wherein, the at least one program upon execution by the at least one processor, cause the at least one processor to implement the page display method according to any one of claims 1-12.

15. A storage medium containing computer-executable instructions, wherein the computer-executable instructions, when executed by a computer processor, are configured to perform the page display method according to any one of claims 1-12.
